# FASCICULE DE BREVET EUROPEEN

(11) **EP 1 285 301 B1**
(45) Date de publication et mention de la délivrance du brevet: **19.08.2009**
(21) Numéro de dépôt: 01934077.7
(22) Date de dépôt: 10.05.2001
(51) Int. Cl.: G02B 21/26

(54) **DISPOSITIF D'OBSERVATION SEQUENTIELLE D'ECHANTILLONS ET PROCEDES L'UTILISANT**
VORRICHTUNG UND VERFAHREN ZUR SEQUENTIELLEN PROBENBEOBACHTUNG
DEVICE FOR SEQUENTIAL OBSERVATION OF SAMPLES AND METHODS USING SAME

(30) Priorité: 15.05.2000 FR 0006125
(43) Date de publication de la demande: 26.02.2003
(73) Titulaire: Trophos SA, 13288 Marseille Cédex 09 (FR)
(72) Inventeur: DELAAGE, Michel, F-13001 Marseille (FR); VILLA, Pascal, F-13260 Cassis (FR); WILLIAMSON, Toni, Louise, F-13260 Cassis (FR); DELAAGE, Pierre, F-13009 Marseille (FR)
(74) Mandataire: Santarelli
(86) Numéro de dépôt international: PCT/FR2001/001412
(87) Numéro de publication internationale: WO 2001/088593

(56) Documents cités:
- CH-A- 508 888
- FR-A- 2 312 044
- US-A- 2 256 245
- US-A- 5 671 086
- US-A- 5 764 409

## Description

La présente invention concerne des procédés et dispositifs pour l'observation ou l'analyse d'échantillons sur un support. Elle concerne plus particulièrement un dispositif permettant l'observation séquentielle de plusieurs échantillons disposés côte à côte sur un même support, notamment une même plaque.

Ce dispositif, notamment de type microscope, comporte un objectif d'observation d'au moins une partie d'un échantillon suivant un axe d'observation depuis une face d'observation du support et une platine de positionnement du support adaptée pour assurer un déplacement relatif entre le support et l'axe d'observation dans un plan perpendiculaire à l'axe d'observation mais laissant libre le déplacement le long de l'axe d'observation supposé vertical. Il comporte en outre des moyens d'illumination d'au moins une partie d'un échantillon et des moyens d'acquisition d'une image en sortie de l'objectif.

Un tel dispositif est utilisé notamment pour l'analyse rapide d'un grand nombre d'échantillons disposés sur un même support, tel qu'une plaque, ces échantillons étant constitués par exemple de cellules, en particulier de cellules adhérentes, mammaliennes, procaryote, végétale, etc. ou d'autres organismes par exemple pathogènes (virus, etc.).

L'analyse cellulaire rapide sur un grand nombre d'échantillons est une nécessité dans l'industrie pharmaceutique, pour le balayage à haut débit de nouvelles substances actives, et dans l'industrie des cosmétiques, où des modèles cellulaires sont utilisés pour tester de nouvelles substances et contrôler les fabrications. Ces industries souhaitent utiliser de plus en plus de tests cellulaires et demandent une simplification de leur mise en oeuvre.

Les plaques de culture couramment utilisées pour contenir les échantillons biologiques (notamment cellulaires) ont une forme générale de plateau. Elles présentent un ensemble d'alvéoles adjacents appelés puits dans tout ou partie desquels est contenu un échantillon. Ces puits sont généralement d'axes parallèles les uns aux autres et s'étendent suivant l'épaisseur de la plaque. Ils débouchent à la surface supérieure de la plaque et sont obturés par un fond formant généralement la face inférieure de la plaque. Les fonds de puits adjacents sont donc généralement reliés les uns aux autres. Ainsi, la face inférieure de la plaque est essentiellement continue. D'autres supports pour l'analyse d'échantillons biologiques sont par exemple des membranes, lames de verre, filtres, ou tout autre support translucide ou opaque etc.

Pour procéder à l'observation microscopique des échantillons, la plaque (ou tout autre support) est disposée au-dessus ou au-dessous de l'objectif du microscope dont l'axe est orienté verticalement. L'observation s'effectue au travers du fond de chaque puits, c'est-à-dire au travers de la face inférieure de la plaque, cette face inférieure constituant la face d'observation, ou directement au-dessus de l'échantillon. Les échantillons sont amenés un à un en regard de l'objectif par déplacement de la plaque dans un plan perpendiculaire à l'axe d'observation grâce à la platine de positionnement. Cette dernière est adaptée pour maintenir la plaque essentiellement ou seulement à sa périphérie, laissant ainsi libre la face d'observation de la plaque. En outre, la platine est adaptée pour laisser à la plaque une certaine liberté de mouvement dans l'axe d'observation.

Les plaques sont généralement réalisées dans un matériau coulé ou moulé, le plus souvent en polystyrène. De ce fait, les plaques comportent le plus souvent des défauts de planéité de leur face inférieure formant le fond des puits. La taille de ces défauts dépasse largement la profondeur de champ de l'objectif. L'écart entre les points extrêmes de la face inférieure atteint couramment 0,2 à 0,3 mm.

Les défauts de planéité de la face inférieure de la plaque et sa déformation font varier la distance entre l'objectif et l'échantillon à analyser. Il est donc nécessaire, pour procéder à l'observation d'une plaque complète ou d'échantillons distribués dans des puits répartis sur une zone importante de la surface de la plaque, de corriger fréquemment la mise au point de l'objectif pour compenser la variation de cette distance.

Cet inconvénient se constate par exemple dans les microscopes à fluorescence conventionnels, dotés d'une caméra CCD et d'un logiciel de morphométrie. Le même problème se pose pour la lecture par contraste de phase telle que proposée par certains matériels.

La mise au point automatique sur ce type de matériels est lente et peu fiable : un puits vide peut entraîner une instabilité du système, voire une mise au point erronée sur un accident de la face externe.

La nécessité de procéder fréquemment à un réglage de la mise au point de l'objectif réduit la vitesse d'acquisition des images des échantillons.

Un problème analogue se produit lors de l'analyse de micro-particules qui sont de plus en plus utilisées pour effectuer des réactions biochimiques, lorsque ces micro-particules sont disposées dans les puits d'une plaque.

De même, la recherche de bactéries sur des filtres oblige à régler fréquemment la mise au point de l'objectif du fait des défauts de planéité du filtre.

Un autre inconvénient est l'utilisation de lampes à mercure et/ou halogène, qui ne permettent pas de réaliser un éclairage stable et homogène.

L'invention a pour but, suivant un premier aspect, d'apporter une solution à ce problème d'acquisition des images en proposant un dispositif, notamment de type microscope, qui puisse fonctionner à une cadence élevée même avec des supports dont la planéité de la face d'observation est imparfaite.

A cet effet, l'invention a pour objet un dispositif tel que défini ci-dessus, plus particulièrement de type microscope, caractérisé en ce qu'il comporte une entretoise fixe par rapport à l'objectif et présentant une surface d'appui sur le support, ladite surface d'appui étant située au voisinage de l'axe d'observation et le support étant libre selon l'axe vertical d'observation , de sorte qu' il garde le contact avec ladite entretoise dont la dimension est adaptée pour maintenir, sur l'axe d'observation, une distance constante entre l'objectif et la face d'observation, au cours d'un déplacement relatif entre le support et l'axe d'observation.

L'invention a également pour but de faciliter la vitesse et la qualité de l'acquisition des signaux, et d'offrir la possibilité d'excitation de l'échantillon sur l'ensemble du champ d'analyse, sans nécessité de balayage au sein d'un même échantillon.

L'invention propose également, suivant un deuxième aspect, une solution aux inconvénients de certaines sources lumineuses utilisées dans l'art antérieur qui sont coûteuses (laser), peu stables ou de durée limitée (lampe mercure).

Suivant d'autres caractéristiques de l'invention :
- le dispositif comporte des moyens de réglage de la distance entre l'objectif et la surface d'appui ; et
- le support est une plaque, notamment une plaque multi-puits comportant 96, 384, 864 ou 1536 puits.

Bien que l'emploi de plaques constitue le mode préféré de mise en oeuvre, il est entendu que lé dispositif d'analyse ou d'observation selon l'invention peut être utilisé avec d'autres supports tels que des membranes, filtres, etc., plus généralement tout support utilisé par l'homme du métier pour le dépôt d'échantillon biologiques, notamment tout support non parfaitement plan sur lequel plusieurs échantillons à analyser sont déposés.

Suivant encore d'autres caractéristiques de l'invention :
- l'entretoise comporte un manchon s'étendant suivant l'axe d'observation, la surface d'appui étant formée par une plage annulaire d'extrémité du manchon ;
- les moyens d'acquisition et les moyens d'illumination comportent des moyens d'autocalibration pour réaliser une correction d'uniformité du faisceau d'illumination à partir de l'observation de billes fluorescentes de référence disposées sur la plaque portant les échantillons ;
- les moyens d'illumination sont adaptés pour couvrir simultanément l'essentiel de la surface d'un échantillon et l'objectif et les moyens d'acquisition sont adaptés pour procurer un champ d'observation couvrant simultanément l'essentiel de la surface de l'échantillon ;
- les moyens d'illumination comprennent au moins une source lumineuse constituée d'une lampe, d'un laser, ou d'un ensemble de diodes électroluminescentes;
- ladite source lumineuse comprend des diodes électroluminescentes émettant à au moins deux longueurs d'onde différentes ;
- le dispositif comporte au moins une lentille permettant de faire converger la lumière émise par la source sur l'échantillon ou une partie de celui-ci ;
- le dispositif comporte un ensemble de lentilles individuelles, chacune étant associée à une diode respective ;
- le dispositif comporte une lentille, notamment une lentille de Fresnel, interposée entre les diodes électroluminescentes et le support ;
- le dispositif comporte un nombre de diodes adapté pour amener sur l'objet une illumination ou un éclairement correspondant à une puissance au moins égale à 2 mW ; et/ou
- les diodes électroluminescentes sont disposées en couronne autour de l'objectif.

Suivant des modes particuliers de réalisation de l'invention :
- ladite source lumineuse est solidaire de l'entretoise.
- l'entretoise est interposée entre la face d'observation du support et l'objectif, et présente une surface d'appui sur la face d'observation ;
- l'entretoise est portée par l'objectif ;
- l'objectif est disposé au-dessus du support, tandis que l'entretoise est disposée au-dessous du support dans l'axe d'observation, de sorte que sa surface d'appui porte sur la face du support opposée à la face d'observation, et est solidaire d'une pièce fixe par rapport à l'objectif ;
- les moyens d'illumination comportent des moyens de guidage du faisceau d'illumination au travers de l'entretoise ou du manchon ; et
- les moyens de guidage du faisceau d'illumination comportent une fibre optique.

L'invention a également pour objet un dispositif d'observation ou d'analyse d'un ou plusieurs échantillons disposés sur un support, du type décrit précédemment, caractérisé en ce que les moyens d'illumination comportent un ensemble de diodes électroluminescentes.

Suivant des modes particuliers de réalisation de l'invention :
- ledit ensemble comprend des diodes électroluminescentes émettant à au moins deux longueurs d'onde différentes ;
- le dispositif comporte au moins une lentille permettant de faire converger la lumière émise par ledit ensemble de diodes sur l'échantillon ou une partie de celui-ci ;
- le dispositif comporte un ensemble de lentilles individuelles, chacune étant associée à une diode respective ;
- le dispositif comporte une lentille, notamment une lentille de Fresnel, interposée entre les diodes électroluminescentes et le support ;
- le dispositif comporte un nombre de diodes adapté pour produire une lumière correspondant à une puissance au moins égale à 2 mW sur l'objet; et
- les diodes électroluminescentes sont disposées en couronne autour de l'objectif.

L'invention a tout particulièrement pour objet un microscope, notamment un microscope d'observation séquentielle d'échantillons disposés (côte à côte) sur une même plaque, tel que décrit précédemment.

Ainsi cette face d'observation, libre dans l'axe vertical , reste à une distance fixe de l'objectif au voisinage de l'axe optique, définie par la longueur de l'entretoise, laquelle est ajustée de sorte que l'image des objets situés sur la face opposée de la face d'observation soit au point sur le capteur.

L'invention a en outre pour objet un procédé d'observation séquentielle de plusieurs échantillons disposés sur un même support, notamment sur une même plaque, plus particulièrement côte à côte, ou plus généralement d'analyse d'un ou plusieurs échantillons, caractérisé en ce qu'il comporte l'utilisation d'un dispositif tel que défini ci-dessus.

L'invention concerne aussi l'utilisation d'un dispositif tel que défini ci-avant pour l'analyse d'un ou plusieurs échantillons, comme par exemple pour l'analyse ou la détection d'acides nucléiques, de polypeptides, lipides, organelles, etc., notamment pour des applications de recherche, diagnostique, screening industriel de bibliothèques de produits, etc.

L'invention sera mieux comprise à la lecture de la description suivante, donnée uniquement à titre d'exemple et faite en référence aux dessins sur lesquels :
- la figure 1 est une vue schématique en perspective d'un analyseur selon l'invention ;
- la figure 2 est une vue schématique en coupe dans un plan vertical contenant l'axe d'observation, dans la région de la plaque de culture, de l'analyseur de la figure 1 suivant un premier mode de réalisation de l'invention ;
- la figure 3 est une vue analogue d'un objectif et d'une coiffe d'objectif réglable formant entretoise, représentés seuls, selon un deuxième mode de réalisation de l'invention ;
- la figure 4 est une vue analogue d'un objectif et d'une coiffe d'objectif intégrant des sources lumineuses (diodes électroluminescentes), suivant un troisième mode de réalisation de l'invention; et
- la figure 5 est une vue schématique en coupe dans un plan vertical contenant l'axe d'observation d'un microscope, et notamment de l'entretoise associée de maintien de la mise au point, dans une configuration en montage droit (observation par le dessus), suivant un quatrième mode de réalisation de l'invention.

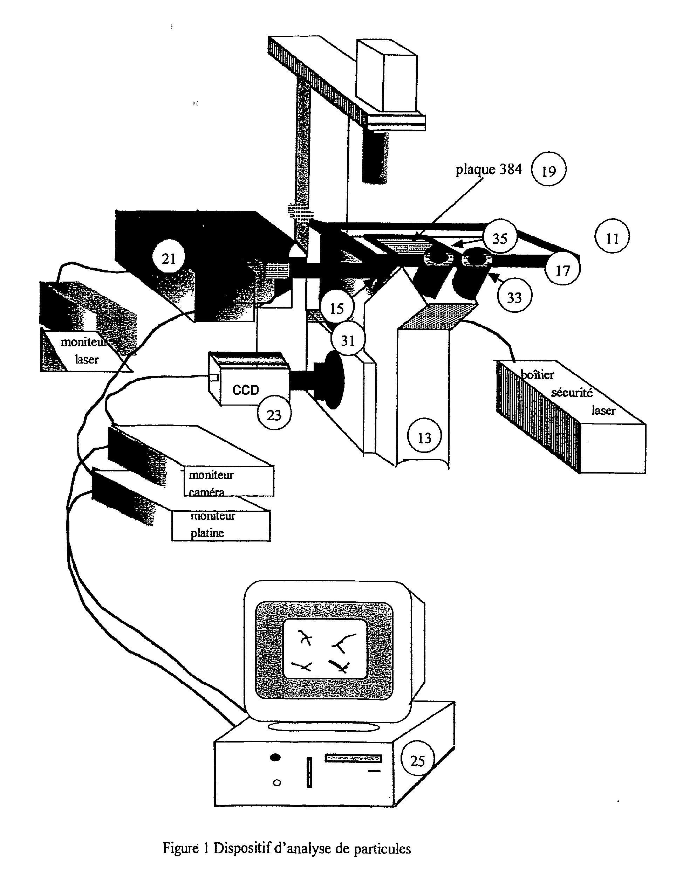

l'analyseur 11 représenté sur la figure 1 est destiné plus particulièrement à l'observation de la fluorescence d'échantillons (notamment cellulaires) contenus dans les puits d'une plaque de titration (ou de culture).

Il comporte essentiellement un bâti 13 portant un objectif d'observation 15 et une platine 17 de positionnement d'une plaque de titration 19 qui laisse libre les déplacements verticaux du support d'échantillon, une source 21 d'illumination locale de la plaque, une caméra 23 placée en arrière de l'objectif 15 et une unité de traitement d'informations 25, tel qu'un micro-ordinateur, reliée à la caméra 23.

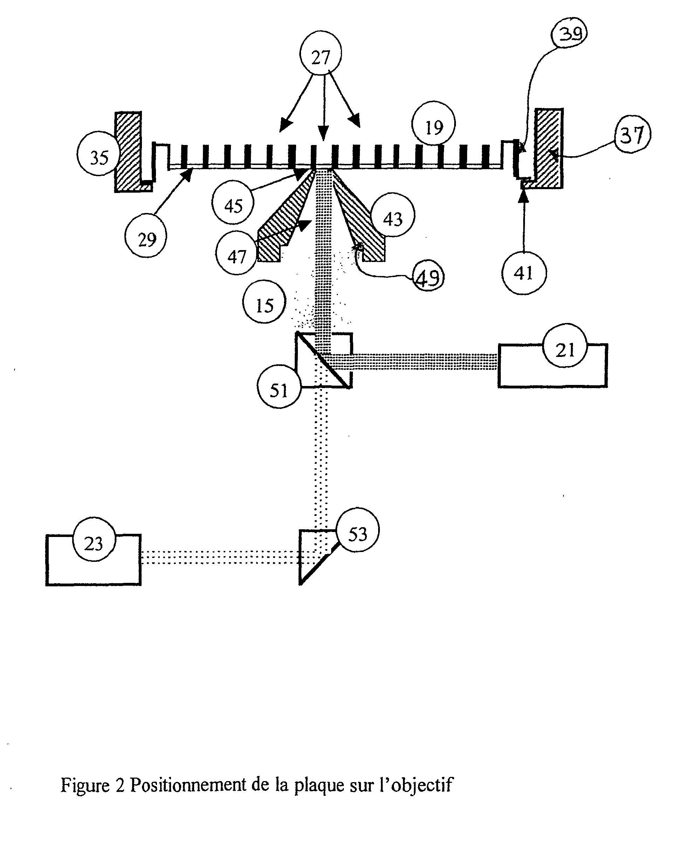

Ce microscope est adapté pour l'observation rapide d'échantillons contenus dans des puits adjacents 27 de la plaque 19, visibles sur la figure 2.

Comme représenté sur la figure 2, les plaques utilisées comportent préférentiellement une face inférieure continue 29 formant le fond des puits 27 et constituant une face d'observation au travers de laquelle les échantillons sont observés. Les puits 27 s'ouvrent à la surface supérieure de la plaque. Ils sont sensiblement cylindriques de section circulaire ou carrée et ont un fond essentiellement plan (partie intérieure du fond du puits). Dans la figure 2 on a représenté en coupe une plaque de 384 puits carrés de côté environ 3 mm, même si le dispositif peut être adapté à toute autre dimension.

Les plaques utilisées comportent généralement 96, 384, 864 ou 1536 puits. Leurs dimensions sont par exemple 107 mm x 71 mm. De telles plaques sont disponibles dans le commerce (Nunc (Danemark), Greiner (Allemagne), Costar, Falcon (U.S.A.), etc.).

On se réfère maintenant de nouveau à la figure 1.

Le bâti 13 est par exemple celui d'un microscope inversé équipé pour l'épi-illumination. Il comporte une tourelle 31 supportant l'objectif 15 de telle sorte que son axe d'observation s'étende sensiblement verticalement.

L'objectif 15 a de préférence un faible grossissement par exemple compris entre 1,25 et 5. Avantageusement, son grossissement est de 2,5 ou 5. Le grossissement est ramené à une valeur proche, par défaut, du rapport entre les dimensions du capteur et celles de l'objet, par des lentilles placées dans la bague allonge qui supporte le capteur. L'objectif a une grande ouverture numérique. En particulier, celle-ci est adaptée pour que le champ d'observation de l'objectif couvre toute la surface du fond d'un puits.

La platine 17 est solidaire du bâti 13. Elle est maintenue sensiblement horizontalement en regard de l'objectif 15. Cette platine comporte, comme connu en soi, une structure porteuse 33 fixée au bâti 13 et un cadre 35 de support de la plaque 19. Ce cadre s'étend dans un plan sensiblement perpendiculaire à l'axe d'observation. Il est mobile à coulissement dans ce plan par rapport à la structure porteuse 33. A cet effet, le cadre est guidé par rapport à la structure porteuse entre des paires de glissières s'étendant suivant deux directions perpendiculaires du plan. Deux actionneurs électriques assurent le déplacement du cadre 35 suivant ces deux directions. Le cadre est sensiblement plus grand que le support, avec un jeu de 0,1 mm ou moins, par exemple, pour laisser libre les mouvements verticaux.

L'unité de traitement d'informations 25 met en oeuvre un programme pilotant la source 21, la caméra 23, et la platine de positionnement 17. En particulier, elle assure la mise en place successive de chacun des échantillons de la plaque en regard de l'objectif et l'acquisition d'une image de chaque échantillon.

L'unité 25 met en outre en oeuvre un programme de traitement et d'analyse de l'image acquise de chaque échantillon. Ces traitements comportent par exemple des traitements primaires, tels que des histogrammes de pixels et des analyses d'amas (clusters en langue anglaise), ainsi que des traitements secondaires tels que des corrections d'excitation, des comparaisons entre puits et des statistiques.

Par ailleurs, l'unité 25 peut réaliser une correction d'uniformité de la lumière excitatrice, ceci à partir de billes fluorescentes de référence disposées dans un ou plusieurs puits de la plaque.

Comme représenté sur la figure 2, le cadre 35 présente quatre cotés 37 s'étendant le long du contour de la plaque 19. Les dimensions des cotés 37 sont adaptées pour qu'ils s'appliquent en contact intime avec les bords notés 39 de la plaque, tout en autorisant le libre mouvement de la plaque 19 suivant la direction de l'axe d'observation.

Intérieurement, le cadre 35 présente un rebord périphérique 41 formant une surface d'appui pour la plaque 19 en dehors des périodes d'observation. Lors des périodes d'observation, la plaque 19 est à l'écart de cette surface d'appui ou au plus, la plaque ne repose que partiellement sur celle-ci.

Selon l'invention, un manchon 43 formant entretoise est solidaire de l'objectif 15. Il prolonge celui-ci axialement et définit, à son extrémité libre, une surface 45 pour l'appui de la face inférieure de la plaque 19 dans le voisinage immédiat du fond du puits contenant l'échantillon à observer. L'autre extrémité du manchon 43 s'appuie sur le bout de l'objectif 15.

Le manchon 43 présente une forme générale tronconique. Il définit intérieurement un conduit axial 47 permettant l'illumination et l'observation de toute la surface d'un échantillon depuis l'objectif 15. Le diamètre du conduit est progressivement décroissant de l'extrémité du manchon en appui sur l'objectif jusqu'à l'extrémité libre du manchon définissant la surface d'appui 45. Son diamètre varie ainsi de 12 mm à 4,5 mm. La hauteur du conduit 47 est par exemple d'environ 20 mm. Il peut varier par exemple de 10 à 30 mm selon l'objectif choisi.

La surface d'appui 45 est plane et forme une couronne d'appui entourant le fond du puits contenant l'échantillon à observer.

A l'extrémité du manchon en appui sur l'objectif 15, le conduit 47 présente un épaulement 49 définissant une surface annulaire suivant laquelle le manchon repose sur l'objectif.

La source d'illumination 21 est formée par une lampe, un laser ou un ensemble de diodes électroluminescentes. Elle est adaptée pour provoquer une irradiation de l'échantillon conduisant celui-ci à émettre un rayonnement propre par un phénomène de fluorescence.

Les fluorophores utilisés sont ceux du marquage cellulaire de l'échantillon tel que le marquage de surface, le marquage intramembranaire, le marquage cytoplasmique, le marquage métabolique (pH, activité respiratoire), le marquage des ARN et ADN non spécifique ou spécifique (Fish), ou le marquage de polypeptides (enzymes, récepteurs de surface, protéines cytoplasmiques ou nucléaires, etc.), par exemple.

Le laser utilisé pour la source 21 est par exemple un laser hélium-néon dont la longueur d'onde est 543 nm, un laser argon de longueur d'onde égale à 488 nm, un laser solide à doublement de fréquence dont la longueur d'onde est égale à 532 nm ou une diode laser de longueur d'onde définie dans une plage allant du bleu au rouge.

Dans un mode de réalisation préféré, la source 21 est formée par un laser Argon de longueur d'onde égale à 488 nm, la puissance du laser étant fixée à 25 mW.

Un prisme 51 de renvoi du faisceau incident issu de la source 21 est disposé en arrière de l'objectif 15 pour diriger le faisceau incident suivant l'axe optique de l'objectif 15 en direction de l'échantillon. Ainsi, le faisceau servant à l'excitation traverse l'objectif assurant une observation de l'échantillon par épifluorescence. Pour des raisons de clarté de la figure 2, les axes optiques de la source 21 et de la caméra 23 sont représentés comme étant parallèles alors qu'ils sont en fait perpendiculaires entre eux.

En variante, le faisceau issu de la source d'illumination est guidé jusqu'à l'échantillon par un miroir ou une fibre optique permettant l'illumination de l'échantillon sans traverser l'objectif.

La caméra 23 utilisée comporte avantageusement une matrice de capteurs à couplage de charge, couramment désignés par capteurs CCD. Elle est sensible au rayonnement ré-émis par l'échantillon par phénomène de fluorescence et est adaptée pour produire une image représentative de ce rayonnement.

La caméra est choisie pour pouvoir acquérir simultanément l'image complète d'un échantillon, c'est-à-dire que son champ est suffisamment large pour couvrir le fond d'un puits, en tenant compte de la modification du faisceau opérée par l'objectif 15.

La caméra comporte avantageusement la possibilité de régler le temps d'acquisition et un dispositif de refroidissement du capteur en vue de réduire le bruit de fond.

La caméra est disposée avec son axe optique perpendiculaire à l'axe d'observation. Un prisme ou un miroir incliné 53 est prévu en arrière de l'objectif 15 pour dévier le faisceau en sortie de l'objectif vers la caméra 23. Un filtre dichroïque peut également être inséré pour éliminer la lumière excitatrice.

D'autres dispositions sont possibles, où l'axe de la caméra coïncide avec celui de l'observation par exemple.

Pour l'observation du contenu d'une plaque, les moyens de positionnement assurent un déplacement de la plaque dans le plan perpendiculaire à l'axe d'observation pour amener successivement chaque échantillon en regard de l'objectif. Pendant ce déplacement et pendant l'observation proprement dite d'un échantillon, la plaque est maintenue, sous l'action de son propre poids, en appui sur l'extrémité du manchon 43. En effet, de part sa structure, la platine de positionnement autorise un libre débattement vers le haut de la plaque suivant la direction de l'axe d'observation. La plaque ne repose alors au plus que partiellement sur le rebord 41 de la platine.

Pendant le déplacement de la plaque sous l'action des moyens de positionnement, la plaque glisse sur la surface d'appui 45 définie à l'extrémité du manchon sur laquelle s'appuie la plaque.

Pendant l'observation, l'échantillon à observer est situé entièrement à l'intérieur de la zone d'appui délimitée par le manchon sur la surface d'observation de la plaque, zone elle-même centrée par l'axe optique. Ainsi, la distance définie entre l'échantillon et l'objectif est la même pour tous les échantillons de la plaque, quelle que soit la planéité de la face d'observation de la plaque. En effet, cette distance est fixée par la seule longueur du manchon 43.

Ainsi, la mise au point de l'objectif n'a pas à être refaite par les moyens d'autofocalisation pour chaque échantillon, ce qui diminue considérablement la durée totale d'analyse de l'ensemble des échantillons portés par une même plaque.

Par ailleurs, comme le champ d'observation de la caméra 23 coïncide avec le champ d'excitation de la source 21, ceux-ci couvrant la totalité du fond d'un puits et donc toute la surface de l'échantillon, l'image complète d'un échantillon peut être acquise simultanément, sans qu'il soit nécessaire de procéder à un balayage de l'échantillon. Ainsi, l'acquisition d'une image s'effectue rapidement.

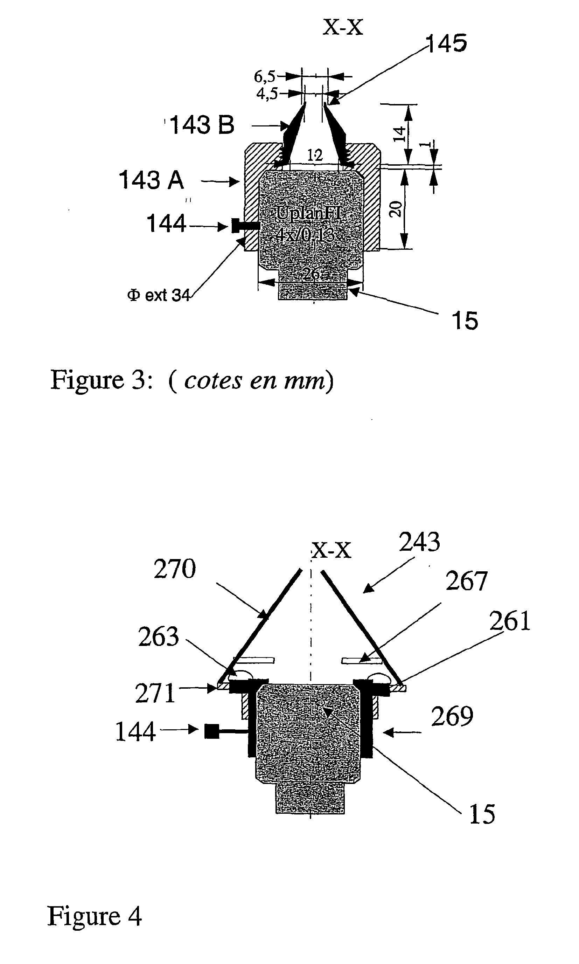

Suivant la variante de réalisation représentée sur la figure 3, le manchon 143 est constitué d'une première 143A et d'une deuxième 143B parties, vissées l'une dans l'autre. La première partie 143A du manchon 143 est fixée sur l'objectif 15, . La première partie 143A s'ajuste et porte sur l'objectif 15 en le coiffant, elle est immobilisée par exemple au moyen d'une vis de blocage 144. Elle présente en outre une ouverture 146 taraudée, centrée sur l'axe d'observation X-X. La deuxième partie 143B, de forme sensiblement tronconique, présente une base de plus grand diamètre filetée, adaptée à l'ouverture taraudée 146 de la première partie 143 A.

Ainsi, la distance entre la surface d'appui de la première partie 143A du manchon 143 sur l'objectif 15, et l'appui sur la surface d'observation du support peut être réglée avec une précision meilleure que la profondeur de champ de l'optique, 50 microns par exemple.

On a décrit, avec la vis de blocage 144 et la liaison par vissage des deux parties 143A, 143B du manchon 143, des moyens de réglage de la distance entre l'objectif 15 et la surface d'appui 145 du manchon 143 sur le support 19.

La hauteur du manchon 143 est telle que la position de la surface d'appui 145 ménagée à son extrémité libre est très légèrement supérieure à la position de la surface extérieure moyenne de la face inférieure de la plaque 19, lorsque celle-ci est en appui sur le rebord 41 du cadre en l'absence du manchon 143. La surface de support 145 fait ainsi saillie avantageusement de 0,3 à 0,5 mm par rapport au plan moyen de la face inférieure de la plaque.

Dans ces conditions, la plaque 19 s'appuie toujours sur la surface 145 du manchon. En particulier, cet appui s'effectue au voisinage immédiat du fond du puits contenant l'échantillon à observer. Il a lieu sur toute la périphérie du fond du puits considéré, mais à l'extérieur de celui-ci, laissant ainsi libre toute la surface du fond pour l'observation de l'échantillon.

On se réfère maintenant à la figure 4 représentant un autre mode de réalisation préféré, dans lequel la source lumineuse est formée par un groupement de diodes électroluminescentes 261. La lumière émise par les diodes est rendue approximativement parallèle par des lentilles individuelles 263, puis est renvoyée sur l'échantillon par un système de guidage, de préférence une lentille de Fresnel 267. Des diodes électroluminescentes ont été décrites par exemple dans la demande européenne n° EP 1031326, dans le domaine dentaire, pour la polymérisation de résines.

De manière surprenante, il s'avère que de tels montages optiques peuvent être adaptés à l'illumination d'échantillons selon l'invention, et il est proposé dans l'invention décrite ici, pour la première fois, d'utiliser des diodes électroluminescentes pour illuminer un échantillon à analyser. Les avantages de ce type de sources lumineuses par rapport aux sources utilisées dans l'art antérieur sont multiples, tels que notamment le caractère stable et monochromatique de la lumière émise, le fait qu'il s'agit d'une source incohérente, évitant les problèmes de cohérence du laser pouvant produire des interférences ou des stries, la simplicité d'utilisation, l'allumage immédiat, la possibilité d'utiliser des longueurs d'ondes différentes, etc.

Les diodes électroluminescentes classiques ont une puissance d'émission généralement comprise entre 2 et 10 mW, plus typiquement entre 3 et 5 mW. Pour une utilisation dans le cadre de l'invention, il est préféré d'illuminer les échantillons avec une puissance de l'ordre de 1 à 10 mW environ, de sorte qu'un ensemble de diodes selon l'invention comprend avantageusement de 2 à 50 diodes, plus généralement de 5 à 40 diodes, par exemple de 5 à 20 diodes. Il est entendu que la puissance du dispositif de diodes peut être inférieure, notamment de l'ordre de 0,5 mW, le temps d'exposition de l'échantillon étant alors augmenté.

L'entretoise 243 est formée essentiellement d'un support de sources lumineuses 269 et d'une coiffe tronconique 270, de préférence en métal, dans laquelle est montée la lentille de Fresnel 267.

Une réalisation particulièrement avantageuse consiste à disposer les diodes électroluminescentes 261 en couronne autour de l'objectif 15 sur le support de sources lumineuses 269, ledit support 269 présentant une plaquette annulaire 271 disposée orthogonalement par rapport à l'axe d'observation X-X, sur l'objectif 15. Il en résulte une plus grande facilité de séparation de la lumière excitatrice et de la lumière de fluorescence. Avantageusement, chaque diode 261 est surmontée d'une lentille 263 permettant de rendre les rayons émis par les diodes 261 parallèles entre eux.

Dans une réalisation préférée, les diodes électroluminescentes 261 émettent à des longueurs d'onde différentes, et l'on peut procéder à des illuminations successives du même échantillon à des longueurs d'onde différentes. Par exemple on choisira un première diode dont l'émission se situe à 470 +- 15 nm et une diode 550 +- 15 nm pour exciter des fluorophores différents. Dans ce cas, le dispositif comprend un ensemble de 2 à 50 diodes de chaque longueur d'onde désirée.

La largeur du faisceau incident rencontrant le fond du puits contenant l'échantillon à observer est telle que la totalité de la surface du puits est illuminée en même temps par le faisceau. Ainsi, la totalité de la surface de l'échantillon est excitée simultanément.

Dans le cas d'un montage en couronne de la (des) source(s) lumineuses, les trois axes, d'illumination, d'observation, et de caméra, peuvent coïncider.

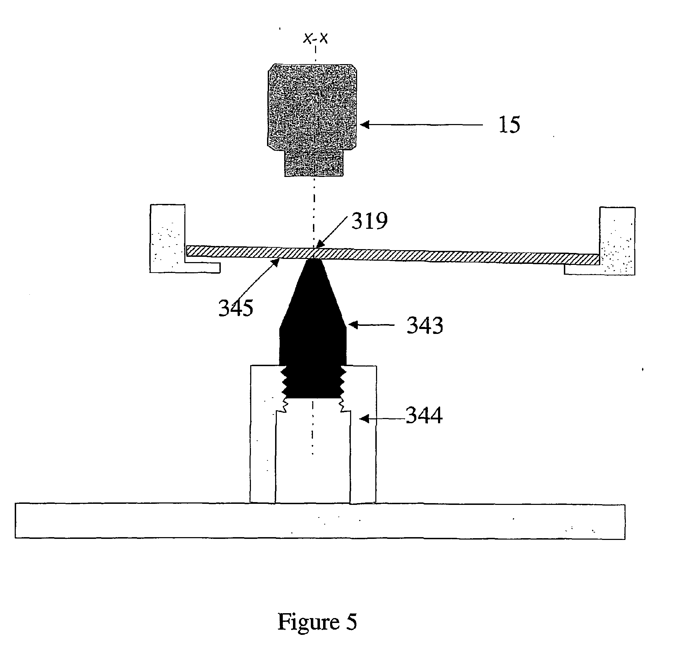

En référence à la figure 5, on va maintenant décrire un autre mode de réalisation de l'invention.

Ce mode particulier concerne les échantillons qui se présentent sous forme de dépôts régulièrement disposés sur un filtre ou tout autre support opaque, et qui sont destinés à être lus par dessus plutôt que par dessous. On utilise alors un support 319 d'épaisseur constante, sur lequel les échantillons peuvent être déposés directement ou sur lequel on posera une membrane filtrante où les échantillons auront été posés au préalable. Les dispositifs optiques sont les mêmes que pour la disposition inversée décrite en référence aux figures précédentes, tandis que le dispositif de maintien de mise au point consiste en un embout rigide ou entretoise 343 venant affleurer le dessous du support 319 et le soulevant légèrement. L'embout 343 est fixé de façon rigide à une pièce fixe par rapport à l'objectif 15, par exemple au bâti 344, ce qui rend invariante la distance entre les échantillons et l'objectif 15. Dans ce mode de réalisation, la surface d'appui 345 de l'embout 343 sur le support 319 porte sur la face du support opposée à l'objectif 15 et à la face d'observation.

On comprend que le fonctionnement de l'entretoise pour maintenir constante la distance séparant la face d'observation de l'objectif est analogue à ce qui a été décrit en référence à la figure 2.

Les dispositifs et procédés de l'invention peuvent être utilisés pour l'analyse d'échantillons d'origine et de nature diverses, marqués selon toute technique connue de l'homme du métier. Il peut s'agir notamment d'échantillons comprenant des cellules d'origine mammifère (animale ou humaine, par exemple cellules nerveuses, tumorales, immunitaires, etc.), bactérienne, végétale, de levure, d'organismes pathogènes, de virus, de tout échantillon ou prélèvement biologique, etc. Les procédés et dispositifs sont adaptés à l'analyse ou la détection de polypeptides, acides nucléiques, lipides, etc. Ils sont particulièrement utilisables pour la mesure de l'effet de composés tests, notamment de bibliothèques de produits, sur des populations de cellules, par exemple dans des tests à haut débit de l'efficacité, la sélectivité ou la toxicité de produits.

Ainsi, dans un mode particulier, l'invention réside également dans une méthode d'analyse (ou de screening) à haut débit utilisant un dispositif tel que décrit ci-avant, plus particulièrement dans lequel l'échantillon est composé d'une population de cellules mise en contact avec un colorant fluorescent représentatif d'une fonction cellulaire (e.g., prolifération, croissance, maturation, différentiation, mort, survie, apoptose, etc.), l'échantillon étant mis en contact, dans des puits séparés d'une plaque, avec des composés d'une collection test, les composés faisant varier l'intensité du marquage de fluorescence étant mis en évidence. La population de cellules est par exemple une population de neurones, notamment d'origine humaine ou animale.

Dans un mode particulier, le colorant fluorescent est associé à un anticorps associé à un antigène cellulaire. Ces anticorps couplés sont disponibles dans le commerce, par exemple ceux produits par la société Immunotech (Marseille, France).

Selon un autre mode de mise en oeuvre, l'invention réside dans un procédé de détection de la présence (ou de la quantité) d'une bactérie dans un ou plusieurs échantillons, comprenant la mise en contact de chaque échantillon avec un marqueur de la bactérie, et l'analyse de la présence du marquage au moyen d'un dispositif tel que décrit ci-avant. Ces marqueurs peuvent être très spécifiques de la bactérie, comme les sondes d'acides nucléiques spécifiques du génome bactérien associées à des marqueurs de fluorescence, ou non spécifiques tels que l'acridine orange et tous les colorants des acides nucléiques. On les trouve en abondance dans le commerce, voir par exemple le catalogue Molecular Probes (Eugene, Oregon, USA).

Selon un autre mode de mise en oeuvre, l'invention réside dans un procédé de détection de la présence (ou de la quantité) d'un virus dans un ou plusieurs échantillons, comprenant la mise en contact de chaque échantillon avec un marqueur spécifique du virus, et l'analyse de la présence du marquage au moyen d'un dispositif tel que décrit ci-avant.

Selon un autre mode de l'invention, le dispositif comporte des filtres sur le trajet de la lumière de fluorescence qui délimitent des zones spectrales, par exemple des filtres dichroïques à 530, 585, et 650 nanomètres permettent d'utiliser jusqu'à quatre marqueurs fluorescents différents, avec une seule excitation à 488 nm, ainsi qu'on le pratique en cytométrie de flux. Ces colorants permettent l'analyse de plusieurs paramètres sur la même cellule. De même le faisceau d'excitation peut associer deux sources, soit simultanément, au moyen d'un miroir dichroïque, soit successivement au moyen d'un miroir ordinaire mobile ou encore par séparation des angles solides d'excitation ainsi qu'il est décrit pour le dispositif de source en couronne, ce qui étend encore les possibilités de l'analyse multiparamétrique. Si les acquisitions successives se font sans déplacement de l'échantillon, on peut procéder à l'analyse de corrélation des émissions pixel par pixel.

L'invention peut également être utilisée pour l'analyse de marquage sur billes, notamment d'interactions protéine-protéine, de complexes immuns, d'hybridations, etc.

Le mode d'acquisition à plusieurs longueurs d'onde est ici particulièrement avantageux, puisqu'il permet la discrimination de plusieurs catégories de particules. Si ces particules sont de taille homogène on peut distinguer des particules présentant des niveaux quantifiés de colorant fluorescent, par exemple une dizaine de niveaux différents. Ces particules peuvent être le siège de réactions analytiques, par exemple d'immunoanalyse, la réaction associée à chaque catégorie de particules peut être quantifiée par un autre marqueur, émettant à une autre longueur d'onde, la même pour toutes les réactions. On peut enregistrer ainsi autant de réactions analytiques différentes que l'on peut distinguer de catégories de particules.

Une autre utilisation de ce type de particules est le codage, lorsqu'elles sont associées à un processus de synthèse combinatoire. L'analyse des particules est le fidèle reflet du composé chimique associé, le contrôle de l'identification pouvant se faire en dehors du laboratoire où s'effectue la mesure, par transmission électronique des données.

Dans une autre utilisation, une population homogène de particules fluorescentes est utilisée pour définir une surface de correction pour l'énergie d'excitation, qui n'est pas uniforme sur tout le champ d'observation ; en particulier, les lasers présentent une distribution gaussienne de l'énergie. La mesure de l'énergie réémise par chaque particule reflète le niveau de l'énergie d'excitation au point où elle se trouve. Avec un petit nombre de particules réparties au hasard sur la surface observée, il est possible de définir une surface, par interpolation, qui servira ensuite à normaliser les niveaux des pixels observés sur des échantillons inconnus. Une surface émettrice uniforme peut aussi servir à cette normalisation. Cette opération est nécessaire lorsqu'on veut quantifier une réaction sur une cellule ou une particule réactive.

L'invention peut encore être utilisée pour analyser les dépôts d'acides nucléiques après hybridations avec des sondes, notamment sur puce, microarrays, etc. Il peut s'agir notamment de dépôts d'ADN après hybridation par des séquences correspondantes d'ADN ou d'ARN, issus d'une cellule ou d'un échantillon, et marqués par un élément fluorescent. Ces dépôts se présentent préférentiellement en arrangements réguliers présentant jusqu'à 5000 dépôts qui peuvent être lus en une seule fois par le dispositif. Plusieurs blocs de dépôts placés côte à côte peuvent être lus séquentiellement.

D'autres aspects et avantages de la présente invention apparaîtront à la lecture des exemples qui suivent, qui doivent être considérés comme illustratifs et non limitatifs.

### Exemple 1

### Dispositif selon l'invention comprenant:

- Un châssis de microscope inversé Olympus IX- 50 équipé d'un cube pour fluorescence MWIB, un objectif UMPLFL 5X - Un laser Argon 488 nm, 25 mW, de marque Spectra-Physics
- Une caméra Hamamatsu C5985 refroidie et son contrôleur. Cette caméra dispose d'une plage de réglage importante du temps d'acquisition, depuis 10⁻⁴ secondes jusqu'à 5 minutes. En utilisation normale selon l'invention le temps d'acquisition est compris entre 0,1 et 1 seconde. Le nombre de pixels est 376151, codés sur 8 bits, soit 256 niveaux, numérotés de 0 à 255. Le refroidissement du capteur représente 20°C en dessous de l'ambiance, assurant une sensibilité de 10 photons.
- Un ensemble de deux tables Märshaüser 120x100 mm et leur contrôleur de marque Lang.
- Un cadre porte-plaque ajusté aux plaques Nunc 384 puits et un couvercle coiffant la plaque en polymère organique noir, occultant le faisceau laser et la lumière ambiante.
- Un ensemble optique de mise en forme du faisceau laser, comportant deux lentilles convergentes, un filtre spatial (collimateur) de diamètre 30 microns.
- Une entretoise en forme de manchon coiffant l'objectif, en polymère organique noir.
- Un plateau métallique supportant les différents éléments et le capotage de sécurité assurant la coupure du faisceau laser en cas d'ouverture.
- Un micro ordinateur PC, avec le logiciel AnalySIS de la société Soft Imaging System (Münster, Allemagne).

### Exemple 2

### Culture de neurones sur plaques 384 puits et comptage selon l'invention:

Après dissection de la moelle épinière d'embryons de rat de 14 jours les neurones sont purifiés selon la technique décrite dans la demande de brevet européen n°EP 110 7003.

Les neurones purifiés sont ensemencés dans des plaques 384 puits à l'aide d'un robot biomek 2000 dans les plaques préalablement traitées selon le protocole.

Dès que les neurones sont attachés au fond des puits (30 minutes à une heure plus tard), le traitement des cellules avec les molécules à tester est effectué par le robot.

Après 4 jours de culture on procède au test de survie consistant à traiter les cultures avec la calcéine-AM (Molecular Probes) qui devient fluorescent après pénétration dans les cellules vivantes.

La fluorescence émise par chacune des cellules présente dans les puits est détectée grâce à l'analyseur selon l'invention. L'acquisition des images des 384 puits est faite en séquence automatique, avec un temps d'exposition de 0.2 seconde par puits, suivie de l'analyse effectuée automatiquement. La duré totale de l'opération est environ 14 minutes. Le résultat obtenu est présenté sous la forme d'un tableau comportant le comptage du nombre de neurones par puits. Le tableau suivant présente un échantillonnage des comptages, par comparaison au comptage à l'oeil effectué au microscope à contraste de phase, en des points sélectionnés correspondant aux contours de la plaque et au milieu. La concordance des résultats témoigne de la régularité de la mise au point lors de l'acquisition automatique.

| N° puits | manuel | Automatique |
|---|---|---|
| 1 | 88 | 76 |
| 2 | 92 | 104 |
| 13 | 111 | 116 |
| 24 | 104 | 101 |
| 169 | 154 | 161 |
| 180 | 132 | 140 |
| 192 | 113 | 118 |
| 193 | 44 | 46 |
| 205 | 55 | 63 |
| 216 | 79 | 75 |
| 337 | 67 | 62 |
| 359 | 54 | 52 |
| 361 | 65 | 77 |
| 362 - | 55 | 58 |
| 384 | 50 | 50 |

### Exemple 3

### Comptage de billes fluorescentes selon l'invention

On utilise une suspension de billes fluorescentes "Flow check fluorospheres" (Beckman Coulter, Miami, USA) calibrées au diamètre 10 µm. Les billes sont déposées dans les puits par un robot de pipetage biomek 2000 (Beckman) à raison de 50 billes par puits, en moyenne, dans une moitié de la plaque (puits 1 à 192) et 100 billes par puits, en moyenne, dans l'autre moitié de la plaque (puits 193 à 384). Après décantation les billes sont comptées à l'oeil par l'opérateur (10 puits par concentration, à différents emplacements de la plaque). Puis la plaque est lue par l'analyseur et les résultats sont comparés. On constate que les résultats par le comptage automatique donnent bien les moyennes attendues et que l'écart-type correspond bien à ce que l'on attend d'une statistique de Poisson. Sur les puits ayant fait l'objet d'un comptage visuel on constate une parfaite concordance avec le comptage automatique.

| N° puits | manuel | Automatique |
|---|---|---|
| 1 | 31 | 32 |
| 2 | 43 | 47 |
| 13 | 65 | 55 |
| 23 | 64 | 62 |
| 24 | 55 | 60 |
| 36 | 62 | 56 |
| 48 | 41 | 40 |
| 169 | 68 | 62 |
| 181 | 56 | 50 |
| 204 | 111 | 99 |
| 359 | 116 | 108 |
| 360 | 128 | 121 |
| 361 | 96 | 90 |
| 373 | 99 | 89 |
| 383 | 88 | 82 |
| 384 | 135 | 124 |

### Exemple 4

### Dispositif selon l'invention comprenant :

- Un châssis de microscope inversé Olympus IX- 50 équipé d'un cube pour fluorescence MWIB, un objectif UplanFI 4X /0.13
- Une source comportant 20 diodes électroluminescentes bleue, émettant à 470 +-15 nm , de marque Light Technologies, Marseille, France, positionnée à l'arrière du châssis à l'emplacement prévu par Olympus pour positionner la lampe d'excitation de fluorescence.
- Une caméra Hamamatsu C5985 refroidie et son contrôleur, identiques à celle de l'exemple 1.
- Un ensemble de table motorisée X-Y Prior Proscan 120x100 mm et leur contrôleur de marque Prior Instruments (Fulburn, UK).
- Une entretoise réglable coiffant l'objectif, en alliage d'aluminium anodisé noir.
- Un micro ordinateur PC, avec un logiciel d'acquisition et de comptage de la société Trophos (Marseille, France).

## Revendications

1. Dispositif pour l'observation ou l'analyse d'un ou plusieurs échantillons disposés sur un support, translucide ou opaque, notamment une plaque (19), comportant un objectif (15) d'observation d'au moins une partie d'un échantillon suivant un axe d'observation (X-X), depuis une face d'observation (29) du support (19 ; 319), des moyens (21) d'illumination d'au moins une partie d'un échantillon et des moyens (23, 25, 53) d'acquisition d'une image en sortie de l'objectif (15), ledit dispositif étant **caractérisé en ce qu'**il comporte : une platine (17) de positionnement du support adaptée pour assurer un déplacement relatif entre le support (19, 319) et l'axe d'observation (X X) dans un plan perpendiculaire à l'axe d'observation, ladite platine comportant un cadre (35) muni d'un rebord périphérique (41) supportant au moins partiellement le support (19, 319) tout en laissant libre le déplacement vertical du dit support (19, 319) au-dessus du dit rebord périphérique (41), une entretoise (43 ; 143 ; 243 ; 343) fixe par rapport à l'objectif (15) et présentant une surface d'appui supérieure (45 ; 145 ; 345) sur laquelle le support (19 ; 319) repose sous l'effet de son propre poids, ladite surface d'appui supérieure de l'entretoise étant située au voisinage de l'axe d'observation, de sorte que ladite entretoise (43; 143; 243; 343) est adaptée pour maintenir, sur l'axe d'observation (X-X), une distance constante entre l'objectif (15) et l'échantillon à observer ou analyser, au cours d'un déplacement relatif entre le support (19 ; 319) et l'axe d'observation (X-X) dans un plan perpendiculaire à l'axe d'observation.

2. Dispositif selon la revendication 1, **caractérisé en ce qu'**il comporte des moyens de réglage (143A, 143B, 144) de la distance entre l'objectif (15) et la surface d'appui supérieure de l'entretoise (145).

3. Dispositif selon la revendication 1 ou 2, **caractérisé en ce que** le support (19) est une plaque comportant 96, 384, 864 ou 1536 puits.

4. Dispositif selon l'une quelconque des revendications 1 à 3, **caractérisé en ce que** l'entretoise (43; 143; 243) comporte un manchon s'étendant suivant l'axe d'observation (X-X), la surface d'appui étant formée par une plage annulaire (45 ; 145) d'extrémité du manchon.

5. Dispositif selon l'une quelconque des revendications précédentes, **caractérisé en ce que** les moyens d'acquisition (23, 25, 53) et les moyens d'illumination (21) comportent des moyens d'autocalibration pour réaliser une correction d'uniformité du faisceau d'illumination à partir de l'observation de billes fluorescentes de référence disposées sur la plaque portant les échantillons.

6. Dispositif selon l'une quelconque des revendications précédentes, **caractérisé en ce que** les moyens d'illumination (21) sont adaptés pour couvrir simultanément l'essentiel de la surface d'un échantillon et **en ce que** l'objectif (15) et les moyens d'acquisition (23, 25, 53) sont adaptés pour procurer un champ d'observation couvrant simultanément l'essentiel de la surface de l'échantillon.

7. Dispositif selon l'une quelconque des revendications 1 à 6, **caractérisé en ce que** les moyens d'illumination (21) comprennent au moins une source lumineuse constituée d'une lampe, ou d'un laser.

8. Dispositif selon l'une quelconque des revendications 1 à 6, **caractérisé en ce que** les moyens d'illumination comprennent au moins une source lumineuse constituée d'un ensemble de diodes électroluminescentes (261).

9. Dispositif selon la revendication 8, **caractérisé en ce que** ladite source lumineuse comprend des diodes électroluminescentes (261) émettant à au moins deux longueurs d'onde différentes.

10. Dispositif selon la revendication 8 ou 9, **caractérisé en ce qu'**il comporte au moins une lentille (263, 267) permettant de faire converger la lumière émise par la source sur l'échantillon ou une partie de celui-ci.

11. Dispositif selon la revendication 10, **caractérisé en ce qu'**il comporte un ensemble de lentilles individuelles (263), chacune étant associée à une diode (261) respective.

12. Dispositif selon la revendication 10 ou 11, **caractérisé en ce qu'**il comporte une lentille (267), notamment une lentille de Fresnel, interposée entre les diodes électroluminescentes (261) et le support (19).

13. Dispositif selon l'une des revendications 8 à 12, **caractérisé en ce qu'**il comporte un nombre de diodes (261) adapté pour produire sur l'objet une lumière correspondant à une puissance au moins égale à 2 mW.

14. Dispositif selon l'une quelconque des revendications 8 à 13, **caractérisé en ce que** les diodes électroluminescentes (261) sont disposées en couronne autour de l'objectif (15).

15. Dispositif selon l'une quelconque des revendications 7 à 14, **caractérisé en ce que** ladite source lumineuse (261) est solidaire de l'entretoise (243).

16. Dispositif selon l'une quelconque des revendications 1 à 15, **caractérisé en ce que** l'entretoise (43 ; 143 ; 243) est interposée entre le support (19) et l'objectif (15).

17. Dispositif selon la revendication 16, **caractérisé en ce que** l'entretoise (43; 143 ; 243) est portée par l'objectif (15).

18. Dispositif selon l'une quelconque des revendications 1 à 14, **caractérisé en ce que** l'objectif (15) est disposé au-dessus du support (319).

19. Dispositif selon l'une quelconque des revendications précédentes, **caractérisé en ce que** les moyens d'illumination comportent des moyens (51) de guidage du faisceau d'illumination au travers de l'entretoise ou du manchon (43).

20. Dispositif selon la revendication 19, **caractérisé en ce que** les moyens de guidage du faisceau d'illumination comportent une fibre optique.

21. Dispositif selon l'une quelconque des revendications précédentes, **caractérisé en ce qu'**il est constitué d'un microscope (11), notamment d'un microscope d'observation séquentielle de plusieurs échantillons disposés côte à côte.

## Claims

1. Device for observing or analysing one or more samples arranged on a translucent or opaque support, in particular a plate (19), comprising an objective (15) for observing at least part of a sample along an observation axis (X-X) from an observation surface (29) of the support (19; 319), means (21) for illuminating at least part of a sample and means (23, 25, 53) for acquiring an image at the output of the objective (15) said device being **characterized in that** it comprises: a stage (17) for positioning the support adapted so as to ensure a relative displacement between the support (19; 319), and the observation axis (X-X) in a plane perpendicular to the observation axis, said stage comprising a frame (35) provided with a peripheral edge (41) at least partially supporting the support (19, 319), while leaving free the vertical displacement of said support (19, 319), above said peripheral edge (41), a spacer (43; 143; 243; 343) fixed relative to the objective (15) and having an upper support surface (45; 145; 345) on which the support (19; 319) rests under the influence of its own weight, said upper support surface of the spacer being situated in proximity to the observation axis such that said spacer (43; 143; 243; 343) is adapted so as to maintain, along the observation axis (X-X), a constant distance between the objective (15) and the sample to be observed or analyzed, during a relative displacement between the support (19; 319) and the observation axis (X-X) in a plane perpendicular to the observation axis.

2. Device according to claim 1, **characterized in that** it comprises means for adjusting (143A; 143B; 144) the distance between the objective (15) and the upper support surface of the spacer (145).

3. Device according to claim 1 or 2, **characterized in that** the support (19) is a plate comprising 96, 384, 864 or 1536 wells.

4. Device according to any one of claims 1 to 3, **characterized in that** the spacer (43; 143; 243) comprises a sleeve extending along the observation axis (X-X), the support surface being formed by a ring-shaped area (45; 145; 345) at the end of the sleeve.

5. Device according to any one of the previous claims, **characterized in that** the means of acquisition (23; 25; 53) and the means of illumination (21) comprise means of self-calibration in order to carry out a correction of the uniformity of the illuminating beam based on the observation of reference fluorescent beads arranged on the plate holding the samples.

6. Device according to any one of the previous claims, **characterized in that** the means of illumination (21) are adapted so as to simultaneously cover most of the surface of a sample and **in that** the objective (15) and the means of acquisition (23; 25; 53) are adapted so as to provide a field of view simultaneously covering most of the surface of the sample.

7. Device according to any one of claims 1 to 6, **characterized in that** the means of illumination (21) comprise at least one light source constituted by a lamp, or a laser.

8. Device according to any one of claims 1 to 6, **characterized in that** the means of illumination comprise at least one light source constituted by a set of light-emitting diodes (261).

9. Device according to claim 8, **characterized in that** said light source comprises light-emitting diodes (261) emitting at least two different wavelengths.

10. Device according to claim 8 or 9, **characterized in that** it comprises at least one lens (263; 267) allowing the light emitted by the source to converge on the sample or a part thereof

11. Device according to claim 10, **characterized in that** it comprises a set of individual lenses (263), each being associated with a respective diode (261).

12. Device according to claim 10 or 11, **characterized in that** it comprises a lens (267), in particular a Fresnel lens, placed between the light-emitting diodes (261) and the support (19).

13. Device according to one of claims 8 to 12, **characterized in that** it comprises a number of diodes (261) adapted so as to produce a light corresponding to a power of at least 2 mW on the object.

14. Device according to any one of claims 8 to 13, **characterized in that** the light-emitting diodes (261) are arranged in a ring around the objective (15).

15. Device according to any one of claims 7 to 14, **characterized in that** said light source (261) is firmly attached to the spacer (243).

16. Device according to any one of claims 1 to 15, **characterized in that** the spacer (43; 143; 243) is placed between the support (19) and the objective. (15).

17. Device according to claim 16, **characterized in that** the spacer (43; 143; 243) is carried by the objective (15).

18. Device according to any one of claims 1 to 14, **characterized in that** the objective (15) is arranged above the support (319).

19. Device according to any one of the previous claims, **characterized in that** the means of illumination comprise means (51) for guiding the light beam through the spacer or sleeve (43).

20. Device according to claim 19, **characterized in that** the means for guiding the light beam comprise an optical fibre.

21. Device according to any one of the previous claims, **characterized in that** it is constituted by a microscope (11), in particular a microscope for the sequential observation of several samples arranged side by side.

## Patentansprüche

1. Vorrichtung für die Beobachtung oder Analyse einer oder mehrerer Proben, die auf einem lichtdurchlässigen oder lichtundurchlässigen Träger, insbesondere einer Platte (19), angeordnet sind, mit einem Objektiv (15) für die Beobachtung wenigstens eines Teils der Probe längs einer Beobachtungsachse (X-X) von einer Beobachtungsfläche (29) des Trägers (19; 319), Mitteln (21) zum Beleuchten wenigstens eines Teils einer Probe und Mitteln (23, 25, 53) zum Erfassen eines Bildes am Ausgang des Objektivs (15), wobei die Vorrichtung **dadurch gekennzeichnet ist, dass** sie umfasst: eine Platine (17) für die Positionierung des Trägers, die dazu ausgelegt ist, eine relative Verlagerung zwischen dem Träger (19, 319) und der Beobachtungsachse (X-X) in einer zur Beobachtungsachse senkrechten Ebene sicherzustellen, wobei die Platine einen Rahmen (35), der mit einem Umfangsrand (41) versehen ist, der den Träger (19, 319) wenigstens teilweise unterstützt und dabei die vertikale Verlagerung des Trägers (19, 319) über dem Umfangsrand (41) zulässt, und einen Abstandshalter (43; 143; 243; 343), der in Bezug auf das Objektiv (15) fest ist und eine obere Abstützoberfläche (45; 145; 345) aufweist, auf der der Träger (19; 319) unter der Wirkung seines eigenen Gewichts aufliegt, umfasst, wobei sich die obere Abstützoberfläche des Abstandshalters in der Nähe der Beobachtungsachse befindet, derart, dass der Abstandshalter (43; 143; 243; 343) während einer relativen Verlagerung zwischen dem Träger (19; 319) und der Beobachtungsachse (X-X) in einer zur Beobachtungsachse senkrechten Ebene auf der Beobachtungsachse (X-X) einen konstanten Abstand zwischen dem Objektiv (15) und der zu beobachtenden oder zu analysierenden Probe aufrecht erhalten kann.

2. Vorrichtung nach Anspruch 1, **dadurch gekennzeichnet, dass** sie Mittel (143A, 143B, 144) zum Regulieren des Abstands zwischen dem Objektiv (15) und der oberen Abstützoberfläche des Abstandshalters (145) umfasst.

3. Vorrichtung nach Anspruch 1 oder 2, **dadurch gekennzeichnet, dass** der Träger (19) eine Platte ist, die 96, 384, 864 oder 1536 Vertiefungen aufweist.

4. Vorrichtung nach einem der Ansprüche 1 bis 3, **dadurch gekennzeichnet, dass** der Abstandshalter (43; 143; 243) eine Muffe aufweist, die sich längs der Beobachtungsachse (X-X) erstreckt, wobei die Abstützoberfläche durch einen ringförmigen Stirnbereich (45; 145) der Muffe gebildet ist.

5. Vorrichtung nach einem der vorhergehenden Ansprüche, **dadurch gekennzeichnet, dass** die Erfassungsmittel (23, 25, 53) und die Beleuchtungsmittel (21) Autokalibrierungsmittel umfassen, um anhand der Beobachtung fluoreszierender Referenzkugeln, die auf der die Proben tragenden Platte angeordnet sind, eine Gleichmäßigkeitskorrektur des Beleuchtungsstrahlenbündels auszuführen.

6. Vorrichtung nach einem der vorhergehenden Ansprüche, **dadurch gekennzeichnet, dass** die Beleuchtungsmittel (21) dazu ausgelegt sind, gleichzeitig die im Wesentlichen gesamte Oberfläche einer Probe abzudecken, und dass das Objektiv (15) und die Erfassungsmittel (23, 25, 53) dazu ausgelegt sind, ein Beobachtungsfeld, das gleichzeitig im Wesentlichen die gesamte Oberfläche der Probe abdeckt, zu schaffen.

7. Vorrichtung nach einem der Ansprüche 1 bis 6, **dadurch gekennzeichnet, dass** die Beleuchtungsmittel (21) wenigstens eine Lichtquelle umfassen, die durch eine Lampe oder einen Laser gebildet ist.

8. Vorrichtung nach einem der Ansprüche 1 bis 6, **dadurch gekennzeichnet, dass** die Beleuchtungsmittel wenigstens eine Lichtquelle umfassen, die durch eine Gesamtheit von Leuchtdioden (261) gebildet ist.

9. Vorrichtung nach Anspruch 8, **dadurch gekennzeichnet, dass** die Lichtquelle Leuchtdioden (261) umfasst, die wenigstens zwei verschiedene Wellenlängen emittieren.

10. Vorrichtung nach Anspruch 8 oder 9, **dadurch gekennzeichnet, dass** sie wenigstens eine Linse (263, 267) umfasst, die ermöglicht, das von der Quelle zu der Probe oder zu einem Teil hiervon emittierte Licht konvergent zu machen.

11. Vorrichtung nach Anspruch 10, **dadurch gekennzeichnet, dass** sie eine Gesamtheit einzelner Linsen (263) umfasst, wovon jede einer entsprechenden Diode (261) zugeordnet ist.

12. Vorrichtungrach Anspruch 10 oder 11, **dadurch gekennzeichnet, dass** sie eine Linse (267), insbesondere eine Fresnel-Linse umfasst, die zwischen die Leuchtdioden (261) und den Träger (19) eingefügt ist.

13. Vorrichtung nach einem der Ansprüche 8 bis 12, **dadurch gekennzeichnet, dass** sie eine Anzahl Dioden (261) umfasst, die dazu ausgelegt sind, am Objekt Licht zu erzeugen, das einer Leistung von wenigstens 2 mW entspricht.

14. Vorrichtung nach einem der Ansprüche 8 bis 13, **dadurch gekennzeichnet, dass** die Leuchtdioden (261) kranzförmig um das Objektiv (15) angeordnet sind.

15. Vorrichtung nach einem der Ansprüche 7 bis 14, **dadurch gekennzeichnet, dass** die Lichtquelle (261) mit dem Abstandshalter (243) fest verbunden ist.

16. Vorrichtung nach einem der Ansprüche 1 bis 15, **dadurch gekennzeichnet, dass** der Abstandshalter (43; 143; 243) zwischen den Träger (19) und das Objektiv (15) eingefügt ist.

17. Vorrichtung nach Anspruch 16, **dadurch gekennzeichnet, dass** der Abstandshalter (43; 143; 243) von dem Objektiv (15) getragen wird.

18. Vorrichtung nach einem der Ansprüche 1 bis 14, **dadurch gekennzeichnet, dass** das Objektiv (15) über dem Träger (319) angeordnet ist.

19. Vorrichtung nach einem der vorhergehenden Ansprüche, **dadurch gekennzeichnet, dass** die Beleuchtungsmittel Mittel (51) zum Führen des Beleuchtungsstrahlenbündels durch den Abstandshalter oder die Muffe (43) umfassen.

20. Vorrichtung nach Anspruch 19, **dadurch gekennzeichnet, dass** die Mittel zum Führen des Beleuchtungsstrahlenbündels eine Lichtleitfaser umfassen.

21. Vorrichtung nach einem der vorhergehenden Ansprüche, **dadurch gekennzeichnet, dass** sie durch ein Mikroskop (11), insbesondere ein Mikroskop zum sequentiellen Beobachten mehrerer nebeneinander angeordneter Proben gebildet ist.
